# EUROPÄISCHE PATENTSCHRIFT

(11) **EP 0 316 756 B1**
(45) Veröffentlichungstag und Bekanntmachung des Hinweises auf die Patenterteilung: **03.03.1993**
(21) Anmeldenummer: 88118707.4
(22) Anmeldetag: 10.11.1988
(51) Int. Cl.: A01K 13/00

(54) **Trocknungsstation für Grosstiere, insbesondere Pferde**
Drying installation for animals, particularly horses
Séchoir pour animaux, particulièrement pour chevaux

(30) Priorität: 18.11.1987 CH 4482/87
(43) Veröffentlichungstag der Anmeldung: 24.05.1989
(73) Patentinhaber: WALSER & CO. AG, CH-9044 Wald (CH)
(72) Erfinder: Kägi, Bruno, CH-8706 Meilen (CH)
(74) Vertreter: Petschner, Goetz

(56) Entgegenhaltungen:
- DE-A- 3 404 282
- US-A- 3 621 199

## Beschreibung

Die vorliegende Erfindung betrifft eine Trocknungsstation für Grosstiere, insbesondere Pferde, mit einem, eine Unterdruckkammer begrenzenden Gehäuse angeordneten Gebläse, in dessen Luftaustrittsbereich verstellbare Strömungsleitmittel angeordnet sind.

Einen wesentlichen Bestandteil der Pferdepflege bildet das Trocknen der Tiere, insbesondere nach deren Bewegung, was nach wie vor durch Trockenreiben bewerkstelligt wird. Da dies aber relativ anstrengend und zeitaufwendig ist, wird oft nicht die ansich notwendige Sorgfalt aufgewendet.

Versuche, das Trocknen mittels üblichem Handfön zu verbessern und zu beschleunigen, mussten rasch wieder aufgegeben werden, da die hochempfindlichen Pferde, werden diese punktuell vom Fön-Luftstrahl getroffen, sofort eine heftige Bewegungsreaktion (Steigen, Ausschlagen etc.) zeigen.

Zwar ist aus der US-A-3 621 199 bereits ein Trocknungsgerät zum Trocknen des gesamten Körpers einer Person bekannt, das ein, in einem, eine Unterdruckkammer begrenzenden Gehäuse angeordnetes Gebläse aufweist, wobei im Luftaustrittsbereich verstellbare Strömungsleitmittel vorgesehen sind. Diese Anordnung ist aber nicht ohne weiteres bei Pferden anwendbar.

Aufgabe der vorliegenden Erfindung ist es nun, eine Trocknungsstation für Pferde zu schaffen, mit welcher die Tiere ohne Handarbeit auf das Sorgfältigste und in kürzester Frist und ohne Reaktionen verursachende Belastung getrocknet werden können.

Dies wird nun erfindungsgemäss dadurch erreicht, dass das Gebläse zusammen mit den Strömungsleitmitteln mittels einer Motorwinde im Gehäuse vertikal auf- und abbewegbar sind, wobei die Strömungsgleitmittel zwei seitliche, sich vertikal erstreckende Klappen umfassen, die gemeinsam über Servosteuermittel horizontal hin- und herbewegbar sind, wobei ferner die Strömungsleitmittel sich horizontal erstreckende Fächerklappen umfassen, die gemeinsam über Servosteuermittel schräg stellbar sind und wobei das Gehäuse unterdruckseitig mindestens eine obere und mindestens eine untere Lufteintrittsöffnung aufweist, derart, dass mindestens das Gebläse, dessen Motorwinde sowie die Servosteuermittel der Strömungsleitmittel mit einer zentralen Steuereinrichtung in Wirkungsverbindung stehen.

Durch diese Massnahmen kann nun das Pferd sanft aber trotzdem schnell und wirksam an allen Stellen des Körpers praktisch gleichzeitig getrocknet werden, indem die Anströmung vorzugsweise von der Rückseite her erfolgt und der entsprechend der Auf- und Abbewegung des Gebläses auf- und abgeleitete sowie seitlich pendelnde Luftstrom das Pferd praktisch vollständig umhüllt.

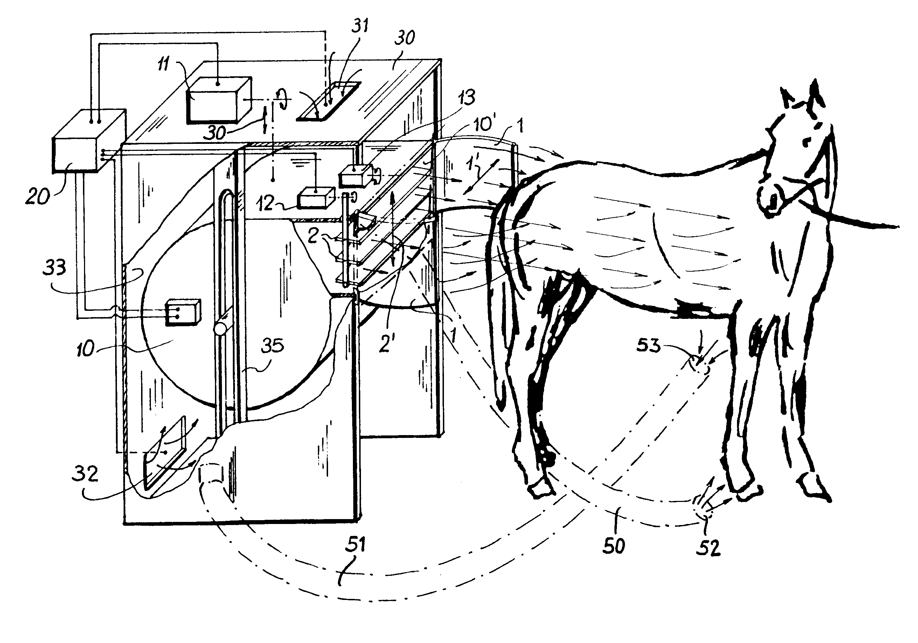

Eine beispielsweise Ausführungsform des Erfindungsgegenstandes ist nachfolgend anhand der Zeichnung, welche in teilweise schaubildartiger, schematischer Darstellung eine erfindungsgemässe Fön-Station für Pferde veranschaulicht, näher erläutert.

Die in Funktion an einem Pferd dargestellte Trocknungsstation umfasst ein Gebläse 10, vorzugsweise ein Warmluft-Gebläse, das in einem Gehäuse 30 durch geeignete Mittel, beispielsweise seitliche Führungsschienen 35 und Motorwinde 11, im wesentlichen vertikal auf- und abbewegbar ist, wie dies durch den Pfeil 30' angedeutet ist.

Das Gehäuse 30 begrenzt eine Unterdruckkammer 33 mit hier einer oberen 31 und einer unteren Lufteintrittsöffnung 32. Der so vom Gebläse 10 angesaugte Mischluftstrom verlässt das Gebläse 10 im Luftaustrittsbereich 10', in dem verstellbare Strömungsmittel 1 und 2 angeordnet sind.

Diese Strömungsleitmittel umfassen dabei zwei seitliche, sich vertikal erstreckende Klappen 1, die gemeinsam über Servosteuermittel 13 in Richtung des Pfeiles 1′ horizontal hinund herbewegbar sind, womit das Pferd auch dann beidseitig angeströmt wird, wenn es sich seitlich etwas wegbewegt.

Ferner umfassen die Strömungsleitmittel sich horizontal erstreckende Fächerklappen 2, die gemeinsam über Servosteuermittel 12 in Richtung des Pfeiles 2′ schräg stellbar sind, was zusammen mit der Auf- und Abbewegung des Gebläses 10 eine totale Anströmung des betreffenden Tieres unabhängig seiner Grösse von der Kuppe bis zu den Hufen erlaubt.

Eine vollständige automatische Anwendung der Trocknungsstation erlaubt eine zentrale Steuereinrichtung 20, welche mit dem Gebläse 10 und dessen Motorwinde 11 sowie mit den Servosteuermitteln 12 und 13 der Strömungsleitmittel 1 und 2 in Wirkungsverbindung steht.

Aus dem Vorbeschriebenen ergibt sich somit eine Trocknungsstation, insbesondere für Pferde, welche allen Anforderungen an schnellem, sanftem und wirkungsvollem Trocknen genügt, welche praktisch wartungsfrei ist und praktisch an jedem beliebigen Ort montiert werden kann.

Hierbei sind natürlich eine ganze Reihe von Modifikationen der Trocknungsstation denkbar, ohne den Rahmen der Erfindung zu verlassen. Insbesondere können etwa die Lufteintrittsöffnungen 31 und 32 der Unterdruckkammer 33 mit Klappenmittel zur Regelung des Lufteintrittes versehen sein, die dann ebenfalls durch die zentrale Steuereinrichtung 20 betätigt werden können. Weiter können ausgangsseitig und/oder eingangsseitig der Unterdruckkammer 33 Schlauchmittel 50,51 anschliessbar sein, welche mit Düsen 52,53 ein punktuelles Anblasen und/oder Absaugen von Hand gestatten, wie das durch strichpunktierte Linien in der Zeichnung angedeutet ist.

## Patentansprüche

1. Trocknungsstation für Grosstiere, insbesondere Pferde, mit einem, in einem, eine Unterdruckkammer (33) begrenzenden Gehäuse (30) angeordneten Gebläse (10), in dessen Luftaustrittsbereich (10') verstellbare Strömungsleitmittel (1;2) angeordnet sind, dadurch gekennzeichnet, dass das Gebläse (10) zusammen mit den Strömungsleitmitteln (1;2) mittels einer Motorwinde (11) im Gehäuse (30) vertikal auf- und abbewegbar sind, wobei die Strömungsleitmittel zwei seitliche, sich vertikal erstreckende Klappen (1) umfassen, die gemeinsam über Servosteuermittel (13) horizontal hin- und herbewegbar sind, wobei ferner die Strömungsleitmittel sich horizontal erstreckende Facherklappen (2) umfassen, die gemeinsam über Servosteuermittel (12) schräg stellbar sind und wobei das Gehäuse (30) unterdruckseitig mindestens eine obere (31) und mindestens eine untere Lufteintrittsöffnung (32) aufweist, derart, dass mindestens das Gebläse (10), dessen Motorwinde (11) sowie die Servosteuermittel (12 und 13) der Strömungsleitmittel (1 und 2) mit einer zentralen Steuereinrichtung (20) in Wirkungsverbindung stehen.

2. Trocknungsstation nach Anspruch 1, dadurch gekennzeichnet, dass ausgangs- und/oder eingangsseitig der Unterdruckkammer (33) handbetätigbare, über Düsenmittel (52,53) punktuell einsetzbare Schlauchmittel (50,51) anschliessbar sind.

## Claims

1. A drying station for large animals, in particular, horses, comprising a blower (10) disposed in a housing defining a low pressure chamber (33) having adjustable flow guide means (1;2) disposed in the region of the air outlet (10') thereof; wherein the blower (10) and the flow guide means (1;2) in the housing (30) define a vertical up-and-down path of movement, the flow guide means comprising two vertical flaps (1) which extend vertically and which are mutually moveable vertically to and fro by servo control means (13); and, furthermore, the flow guide means comprise fan flaps (2) which extend vertically and which are mutually tiltable by servo control means (12), and whereby the housing (30) has at its low-pressure side, at least one upper and at least one lower air inlet opening (32) in such a manner that at least the blower (10) and the positioning means (11) thereof as well as the servo control means (12 and 13) of the flow guide means (1 and 2) are in operative connection with a central control means (20).

2. The drying station as defined in claim 1, wherein hose means (50,51) are connectable at the outlet and/or inlet side of the low pressure chamber (33) which are hand-operable and which may be used at specific points by way of nozzle means (52,53).

## Revendications

1. Station séchante pour gros animaux, en particulier chevaux, comportant un ventilateur (10) disposé dans un caisson (30) délimitant une chambre de dépression (33) dans la zone de sortie d'air (10') caisson dans lequel sont disposés des organes réglables d'orientation de l'écoulement (1, 2), caractérisée en ce que le ventilateur (10) conjointement avec les organes d'orientation de l'écoulement (1, 2) est mobile verticalement de bas en haut et de haut en bas, dans le caisson (30), à l'aide d'un treuil à moteur (11), les organes d'orientation de l'écoulement comprenant deux volets latéraux (1) s'étendant verticalement qui sont conjointement mobiles horizontalement dans un mouvement de va-et-vient, à l'aide de moyens à servocommande (13), les organes d'orientation de l'écoulement comprenant, en outre, des volets en éventail (2) s'étendant horizontalement, qui sont conjointement ajustables à l'oblique, à l'aide de moyens à servocommande (12), le caisson (30) présentant côté dépression au moins une ouverture d'entrée d'air supérieure (31) et inférieure (32), de sorte qu'au moins le ventilateur (10), son treuil à moteur (11), ainsi que les moyens à servocommande (12 et 13) des organes d'orientation de l'écoulement (1 et 2) soient reliés activement avec un dispositif central de commande (20).

2. Station séchante selon la revendication 1, caractérisée en ce que peuvent être raccordés, côté entrée et/ou côté sortie de la chambre de dépression (33), des moyens à flexibles (50, 51) à actionnement manuel, pouvant être ponctuellement utilisés à l'aide de moyens à buses (52, 53).
